Europäisches Patentamt

European Patent Office

Office européen des brevets

(11) Numéro de publication: **0 204 598**
**B1**

(12) **FASCICULE DE BREVET EUROPEEN**

(45) Date de publication du fascicule du brevet:
**13.07.88**

(51) Int. Cl.⁴: **B 64 C 13/12**

(21) Numéro de dépôt: **86401005.3**

(22) Date de dépôt: **12.05.86**

(54) **Dispositif de commande pourvu de deux manches couplés.**

(30) Priorité: **07.06.85 FR 8508670**

(43) Date de publication de la demande:
**10.12.86 Bulletin 86/50**

(45) Mention de la délivrance du brevet:
**13.07.88 Bulletin 88/28**

(84) Etats contractants désignés:
**DE GB IT NL**

(56) Documents cités:
**FR - A - 2 558 136**
**US - A - 3 651 709**
**US - A - 3 726 497**
**US - A - 4 367 373**

(73) Titulaire: **AEROSPATIALE Société Nationale Industrielle, 37, Boulevard de Montmorency, F-75781 Paris Cédex 16 (FR)**

(72) Inventeur: **Fabre, Pierre, 16/18 rue du Foyer Toulousain, F-31300 Toulouse (FR)**
Inventeur: **Nègre, Didier, 1, rue Louise Labbe, F-31320 Castanet-Tolosan (FR)**

(74) Mandataire: **Bonnetat, Christian et ai, Cabinet PROPI Conseils 23 rue de Léningrad, F-75008 Paris (FR)**

# Description

La présente invention concerne un dispositif de commande pour une machine, pourvu de deux manches de commande couplés et destinés à être actionnés par des opérateurs respectifs.

Quoique non exclusivement, elle s'applique tout particulièrement aux dispositifs de pilotage pour aéronef et elle sera ci-après plus spécialement décrite en référence à une telle application, étant bien entendu qu'il ne peut en résulter une limitation de la portée de l'invention.

On sait que de nombreuses machines, telles que avions, hélicoptères, chars d'assaut, engins de travaux publics, etc., sont pourvues d'un ensemble d'éléments commandés pouvant être actionnés à partir de l'un ou l'autre de deux postes de commande conjugués, contrôlés par deux opérateurs distincts (appelés pilote et copilote dans le cas de véhicules) et équipés chacun d'un organe de commande du type manche, articulé de façon à pouvoir pivoter dans n'importe quelle direction. Ces deux organes de commande sont reliés auxdits organes à commander et sont mécaniquement couplés entre eux de sorte que chacun desdits opérateurs dispose de l'ensemble des commandes desdits organes à commander et que le basculement volontaire par actionnement direct de l'un desdits organes de commande par un opérateur entraîne un basculement induit identique de même sens que l'autre.

Jusqu'à présent, la transmission des ordres de commande entre un manche actionné par un opérateur et un organe à commander s'effectuait de façon mécanique, de sorte que lesdits manches étaient de dimensions relativement importantes et susceptibles de supporter et de transmettre des efforts mécaniques importants. De tels manches étaient donc prévus pour être disposés devant lesdits opérateurs, tenus à deux mains par chaque opérateur et actionné par action des avant-bras de celui-ci, l'amplitude et l'intensité de leurs mouvements étant conditionnées par les résistances à vaincre pour la manœuvre des commandes mécaniques.

On remarquera que l'utilisation des deux mains de chaque opérateur non seulement permettait de transmettre des efforts importants, mais encore rendait ces efforts symétriques et identiques pour les deux opérateurs.

Cependant, de plus en plus, les commandes mécaniques sont remplacées par des commandes électriques présentant de nombreux avantages, par exemple en ce qui concerne la masse, l'encombrement, la maintenance, la prise en compte de lois de commande complexes, etc. Il en résulte que lesdits manches sont reliés et associés à des capteurs électriques qui détectent les variations de position desdits manches et qui contrôlent des commandes électriques actionnant lesdits organes commandés en fonction des indications desdits capteurs. Dans ces conditions, lesdits manches ne transmettent que des efforts très faibles et leurs dimensions et leur résistance mécanique peuvent être considérablement diminuées. C'est ainsi que l'on est arrivé à la conception et à l'utilisation de manches de faibles dimensions appelés «mini-manches» ou «mini-sticks», pouvant être tenus et actionnés par une seule main d'un opérateur.

En plus des avantages mentionnés ci-dessus concernant l'utilisation des commandes électriques, de tels mini-manches permettent de dégager l'espace en avant des opérateurs, afin d'optimiser le regroupement d'autres commandes devant ceux-ci, de sorte que chaque mini-manche est disposé latéralement par rapport auxdits opérateurs. De plus, notamment lorsque les deux postes de commande des opérateurs sont parallèles (ce qui est généralement le cas dans un véhicule dans lequel lesdits postes sont disposés face à l'avant de celui-ci), afin de respecter la symétrie de la machine par rapport à un axe passant entre lesdits postes, l'un des mini-manches est disposé à gauche de l'opérateur de gauche et l'autre à droite de l'opérateur de droite. Dans un tel cas, l'opérateur de gauche tient donc le mini-manche associé de la main gauche, alors que l'opérateur de droite tient le sien de la main droite. Le respect de la symétrie de la commande de la machine entraîne donc alors une asymétrie sur le plan des opérateurs.

On a remarqué qu'une telle asymétrie soulève des difficultés lorsque la commande de la machine nécessite des basculements des mini-manches, latéraux de gauche à droite et inversement par rapport auxdits opérateurs. Cela provient certainement de la morphologie humaine qui fait que les possibilités d'exercer un effort latéral à l'aide d'une même main fermée sur un mini-manche sont différentes selon que la force est exercée en poussant avec la paume vers soi ou en tirant avec les doigts vers l'extérieur. De plus, dans la disposition décrite ci-dessus, à une poussée avec la paume dans l'un des postes de commande correspond une traction avec les doigts dans l'autre poste.

Ainsi, non seulement la poussée et la traction latérales seront ressenties différemment par chaque opérateur, mais encore l'asymétrie d'efforts s'inverse lorsqu'une commande avec la main gauche au poste de gauche est relevée par une commande avec la main droite au poste de droite et vice versa. Le passage de la commande de la machine d'un poste de commande à l'autre s'effectue donc avec à-coup, ce qui risque d'entraîner des conséquences graves, notamment dans le cas d'un avion.

Pour remédier à ces inconvénients, on a déjà proposé, dans un dispositif complexe de conjugaison mécanique de deux mini-manches, d'associer un dispositif de sensation d'effort à chacun desdits organes de commande, de façon que le dispositif de sensation d'effort associé à l'organe de commande actionné par une main gauche soit actif seulement lorsque celui-ci est volontairement et directement actionné par un opérateur de gauche à droite, et que le dispositif de sensation d'effort associé à l'organe de commande actionné par une main droite soit actif seulement lorsque celui-ci est volontairement et directement actionné par un opérateur de droite à gauche.

Un tel dispositif de conjugaison mécanique de deux mini-manches, pourvu de dispositifs de sensation d'effort complexes à action sélective, donne satisfaction. Cependant, du fait de sa structure mécanique, il ne peut permettre de tirer le maximum de profit de la réalisation sous forme électrique des commandes de vol. De plus, il présente des jeux et des frottements non négligeables par rapport aux débattements réalisés et aux efforts mis en jeu, de sorte que ses performances, notamment en ce qui concerne la précision de pilotage, ne sont pas aussi bonnes qu'on pourrait l'espérer.

La présente invention a pour objet de remédier à ces inconvénients. Elle concerne un dispositif de commande comportant deux manches mécaniquement indépendants, par exemple (mais non exclusivement) des mini-manches, actionnant de façon conjuguée les éléments de pilotage d'une machine, notamment d'un aéronef, par l'intermédiaire de capteurs électriques associés à des moyens électroniques de calcul et de logique, notamment au moins un calculateur électronique. L'invention permet ainsi de tirer le maximum de profit des commandes de vol électrique, en permettant d'obtenir de meilleures performances et une sécurité de pilotage supérieure. De plus, par suite de la suppression du couplage mécanique entre les manches, on résout les problèmes mentionnés ci-dessus concernant l'inversion des sensations d'efforts d'un poste de pilotage à l'autre.

L'invention permet donc la rationalisation des commandes électriques de vol, notamment équipées de mini-manches latéraux, dans le pilotage d'aéronefs, ainsi que l'amélioration des conditions de pilotage des aéronefs en assurant sécurité, confort et précision.

Par rapport à l'état de la technique auquel appartient déjà un dispositif pour la commande d'éléments d'une machine, comportant deux organes de commande du type manche à partir de l'un ou l'autre desquels peuvent être commandés lesdits éléments, ces organes étant actionnés par des opérateurs distincts et étant, chacun, montés basculants autour d'au moins un axe, et reliés à au moins un capteur délivrant un signal électrique représentatif de l'amplitude de basculement dudit manche associé autour dudit axe de part et d'autre d'une position neutre, l'invention est caractérisée en ce que le dispositif comporte un système de traitement de signaux recevant les signaux provenant des deux capteurs et délivrant une consigne de commande unique adressée auxdits éléments de la machine.

De préférence, ladite consigne de commande unique est:
— nulle lorsque les deux manches sont en position neutre;
— égale au signal correspondant à un manche écarté de sa position neutre, lorsque l'autre manche est en position neutre;
— égale à la somme des signaux des deux capteurs lorsque les basculements des deux manches sont de même sens, cette somme étant limitée au signal maximal susceptible d'être émis par un manche;
— égale, lorsqu'un premier opérateur ayant basculé son manche dans un sens, le second opérateur bascule le sien en sens opposé, mais en deçà d'un seuil de course, à la différence entre le signal émis par le capteur associé au premier opérateur et celui émis par le capteur associé au second opérateur, et
— égale, lorsqu'un premier opérateur ayant basculé son manche dans un sens, le second opérateur bascule le sien en sens opposé, au-delà dudit seuil de course, à la différence entre le signal émis par le capteur associé au second opérateur et une fraction de celui émis par le capteur associé au premier opérateur.

Ainsi:
— lorsqu'un seul opérateur est aux commandes, c'est son ordre qui agit sur lesdits éléments;
— lorsque le second opérateur déplace son manche dans le même sens que le premier ou dans le sens contraire, mais en deçà dudit seuil de course, les deux ordres sont sommés algébriquement;
— le dernier opérateur qui franchit le seuil de course dans le sens opposé au premier prend la priorité. Cette priorité correspond à une diminution de l'autorité de l'opérateur non prioritaire à une fraction de son autorité maximale.

Avantageusement, lorsque le manche du second opérateur a été basculé en sens opposé à celui du premier au-delà dudit seuil de course, ladite consigne unique devient le signal du capteur associé audit premier opérateur, dès que le manche du second opérateur revient en position neutre ou que le manche dudit opérateur repasse par la position neutre. Ainsi, un opérateur peut retrouver toute son autorité sitôt que l'autre opérateur ou lui-même a ramené son manche en position neutre.

Afin que chaque opérateur connaisse l'ordre réellement appliqué auxdits éléments commandés, des dispositifs d'affichage et/ou des voyants sont prévus pour indiquer à chacun des opérateurs l'origine de la consigne de commande actuelle. Par suite, chaque opérateur peut savoir qui commande la machine et comment.

On a trouvé par des expérimentations qu'il était avantageux que le seuil de course corresponde au tiers de la course maximale et que ladite fraction du signal du premier opérateur soit égale à un tiers.

Dans le cas où, par exemple à bord d'un aéronef, chaque manche peut basculer autour de deux axes différents et est associé à deux capteurs, délivrant respectivement des signaux électriques représentatifs de l'amplitude de basculement dudit manche autour de ces deux axes, chacun des deux axes de basculement d'un manche étant associé à un axe de basculement de l'autre manche, ledit système de traitement des signaux reçoit les signaux provenant des quatre capteurs et délivre deux consignes de commande, dont chacune correspond au basculement desdits manches autour d'un desdits axes.

De préférence, si l'une des consignes de commande devient égale à la différence entre le signal émis par un capteur associé au second opérateur ayant basculé son manche et une fraction de celui émis par le capteur correspondant associé au premier opérateur, il en est de même de l'autre desdites consignes.

Ainsi, si un pilote perd la priorité par rapport à un axe de basculement, il la perd également pour l'autre axe de basculement.

Bien entendu, le système de traitement des signaux comporte des moyens pour comparer les signaux issus desdits capteurs à des signaux de référence représentatifs de valeurs caractéristiques.

Dans le cas particulier d'un aéronef, il est connu de prévoir un ou plusieurs calculateurs de commande recevant tous les paramètres concernant la situation et la configuration de l'aéronef, ainsi que les conditions de vol. Les signaux issus desdits capteurs peuvent donc être également adressés auxdits calculateurs.

A partir de ces deux ensembles de données (couplage des ordres des manches et paramètres de «situation» de l'avion) et compte tenu des lois de pilotage en mémoire dans les calculateurs, ces derniers élaborent en permanence les ordres de commande aux surfaces mobiles assurant le pilotage de l'avion.

A un effort exercé par un pilote sur un manche correspond donc, d'une part un déplacement et une action de pilotage selon le procédé de traitement logique propre à l'invention, conjuguée avec celle due à l'effort exercé par l'autre pilote sur l'autre manche, et d'autre part une sensation d'effort propre au manche commandé et à son sens de déplacement.

Les moyens de réalisation mis en œuvre dans le système de pilotage permettent d'obtenir de très bonnes performances, notamment de très faibles frottements et pas de jeux et ainsi d'actionner les différents organes de pilotage à partir de seuils d'efforts très faibles permettant d'obtenir une très bonne précision de pilotage.

Ce système de pilotage par organes de commande mécaniquement indépendants permet d'éviter tout risque de blocage dans les liaisons entre deux organes.

Il permet de plus de mettre en parallèle plusieurs éléments et d'assurer des taux de fiabilité et des conditions de sécurité difficilement réalisables par les moyens utilisés classiquement.

Les figures du dessin annexé feront bien comprendre comment l'invention peut être réalisée. Sur ces figures, des références identiques désignent des éléments semblables.

La figure 1 est une vue partielle en perspective, de l'arrière vers l'avant, d'un poste de pilotage d'avion civil gros porteur équipé de mini-manches latéraux.

La figure 2 montre schématiquement l'ensemble d'un mini-manche et de ses capteurs, prévu dans le poste de pilotage de la figure 1.

La figure 3 représente le schéma fonctionnel de l'ensemble d'un mini-manche et de ses capteurs, montré par la figure 2.

La figure 4 donne le schéma synoptique du dispositif de commande conforme à l'invention.

Les figures 5a à 5f sont destinées à illustrer schématiquement le fonctionnement du dispositif de commande selon l'invention.

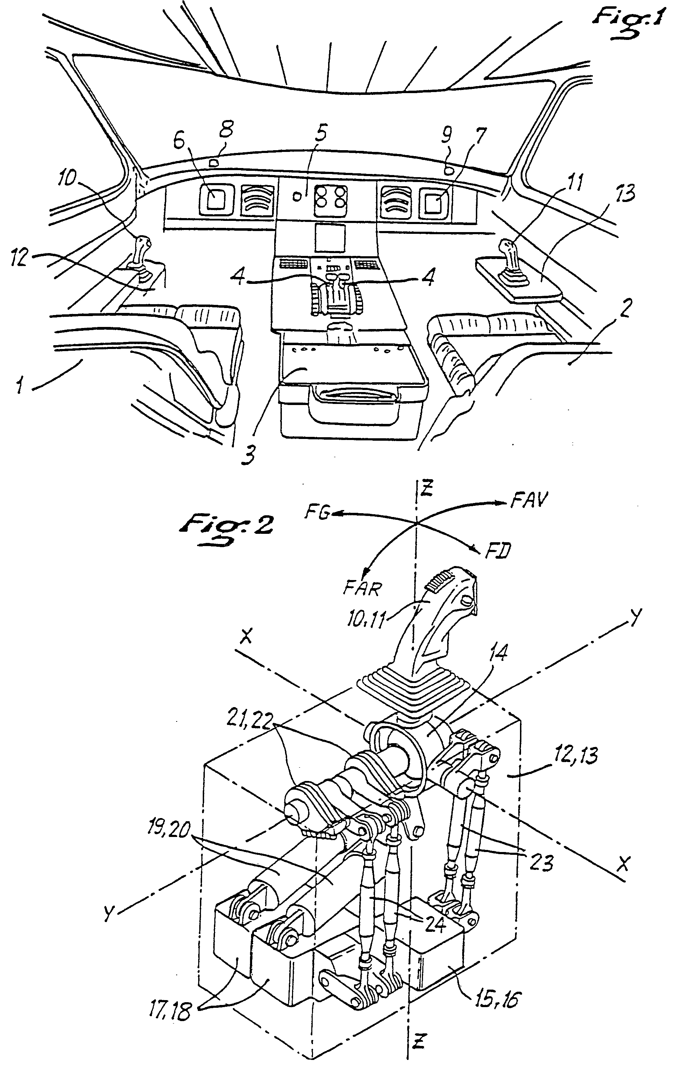

Sur la figure 1, on a représenté schématiquement et partiellement, en vue axiale en perspective de l'arrière vers l'avant, le poste de pilotage d'un avion civil gros porteur moderne, comportant un siège 1 pour un pilote et un siège 2 pour un copilote. De façon usuelle, la place de pilotage destinée au pilote se trouve à gauche, alors que celle du copilote se trouve à droite. Les deux places de pilotage sont séparées l'une de l'autre par une console centrale 3 pourvue d'une pluralité d'organes de commande et de contrôle, tels que des poignées 4 de commande des gaz. Par ailleurs, sur le tableau de bord 5 sont prévus d'autres organes de contrôle, dont notamment deux dispositifs d'affichage 6 et 7 et deux voyants 8 et 9, dont le fonctionnement sera décrit ci-après, en liaison avec le fonctionnement du dispositif de commande de l'invention. Le dispositif d'affichage 6 et le voyant 8 sont destinés au pilote et sont disposés en regard du siège 1 de celui-ci. En revanche le dispositif d'affichage 7 et le voyant 9 sont attribués au copilote et sont donc disposés en regard du siège 2.

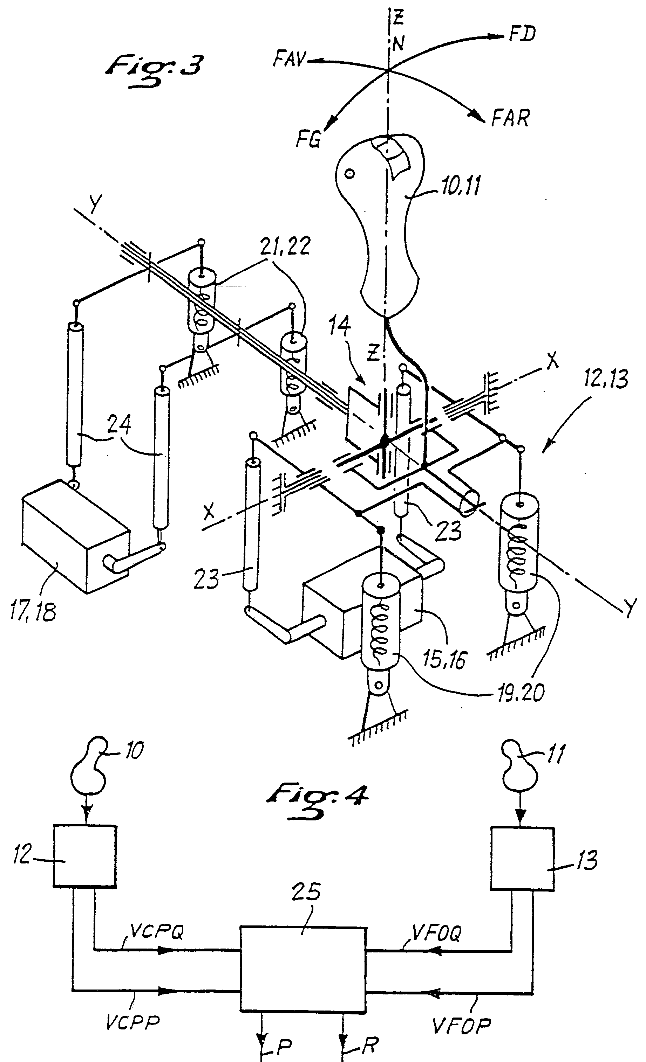

On remarquera que, dans le poste de pilotage représenté sur la figure 1, les deux manches de pilotage usuels se trouvant devant le pilote et le copilote, respectivement, et destinés à être tenus et manœuvrés à deux mains, ont été supprimés. Ces manches usuels, de grande dimension, ont été remplacés par de simples poignées pivotantes 10 et 11, respectivement disposées à gauche du pilote et à droite du copilote ; ainsi, la poignée 10 est destinée à être actionnée par la main gauche du pilote et la poignée 11 par la main droite du copilote. Par exemple (voir également les figures 2 et 3), l'avion est commandé en profondeur en basculant la poignée 10, ou la poignée 11, parallèlement au plan longitudinal médian de l'avion autour d'un axe transversal X-X et en roulis en basculant l'une desdites poignées latéralement, transversalement audit plan longitudinal médian, autour d'un axe longitudinal Y-Y. Comme on le verra ci-après, chaque poignée peut, à partir d'une position neutre N, être basculée vers l'avant (flèche FAV), vers l'arrière (flèche FAR), vers la droite (flèche FD) et vers la gauche (flèche FG).

Les poignées 10 et 11 sont appelées «mini-manches» et sont, conformément à l'invention, électriquement couplées, pour que l'avion soit pilotable à partir de l'une ou l'autre d'entre elles, ou à partir des deux.

Comme montré par les figures 2 et 3, chaque poignée 10 et 11 est associée à un mécanisme 12 ou 13 respectivement, comportant une articulation, par exemple une rotule ou un cardan 14, lui permettant de basculer autour de l'axe transversal X-X et autour de l'axe longitudinal Y-Y. Les mécanismes 12 et 13 comportent de plus chacun un capteur de profondeur 15 ou 16, un capteur de roulis 17 ou 18, un dispositif de sensation d'effort en profondeur 19 ou 20, et un dispositif de sensation d'effort en roulis 21 ou 22 (sur ces figures, chaque dispositif 19, 20, 21 et 22 est double).

Ainsi, lorsque la poignée 10 est actionnée par le pilote de façon que son axe Z-Z soit déplacé hors de sa position neutre N, tout basculement autour de l'axe X-X est transmis, par exemple par des bielles 23, au capteur de profondeur 15, qui délivre un signal de profondeur représentatif VCPQ, alors que tout basculement autour de l'axe Y-Y est transmis, par exemple par des bielles 24, au capteur de roulis 17, qui délivre un signal de roulis représentatif VCPP.

De même, lorsque la poignée 11 est actionnée par le copilote de façon que son axe Z-Z soit déplacé hors de sa position neutre N, tout basculement autour de l'axe X-X est transmis, par les bielles 23 correspondantes, au capteur de profondeur 16 associé, qui délivre un signal de profondeur représentatif VFOQ, alors que tout basculement autour de l'axe Y-Y est transmis, par les bielles 24 correspondantes, au capteur de roulis 18, qui délivre un signal de roulis représentatif VFOP.

Les dispositifs de sensation d'effort 19 à 22, par exemple des ressorts, introduisent une certaine résistance au basculement volontaire des poignées 10 et 11 et ramènent celles-ci en position neutre N, lorsqu'elles sont relâchées par le pilote ou le copilote.

Ainsi, chaque mécanisme 12 et 13, en relation avec le basculement de la poignée 10 ou 11 associée, est susceptible d'émettre un signal de profondeur, VCPQ ou VFOQ respectivement, et un signal de roulis, VCPP ou VFOP respectivement.

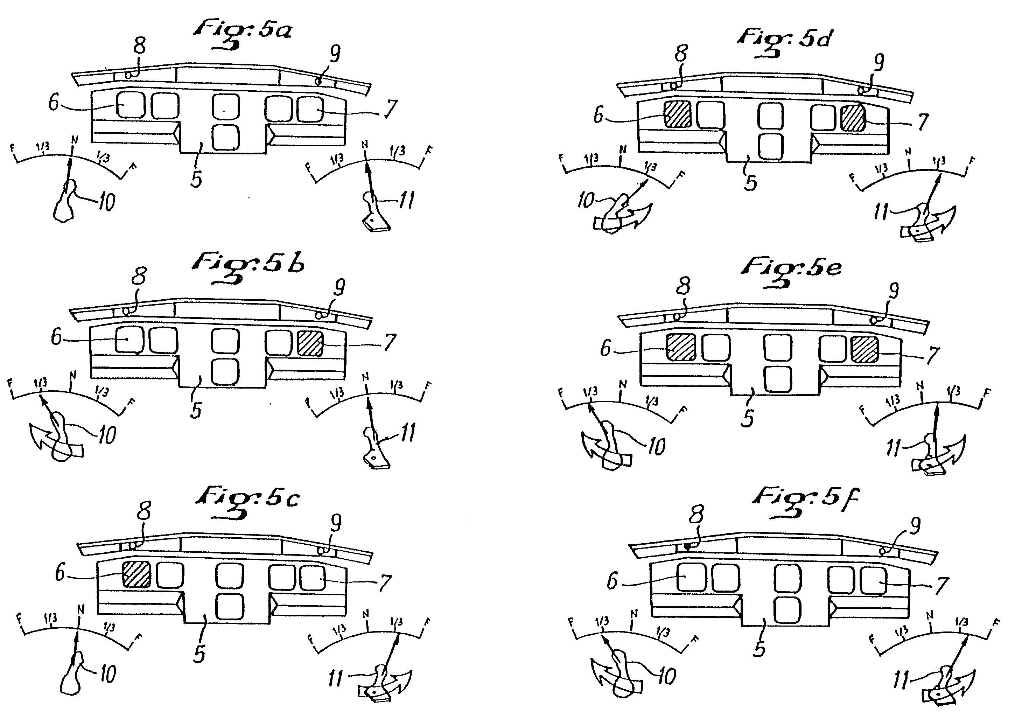

Comme le montre schématiquement la figure 4, le dipositif de commande selon l'invention comporte un système 25 de traitement des ordres de commande, qui reçoit les signaux VCPQ, VFOQ, VCPP et VFOP résultant du déplacement de l'une et/ou l'autre des poignées 10 et 11 et qui combine ces signaux pour engendrer à ses sorties une consigne unique P de profondeur et une consigne unique R de roulis. Ces consignes P et R sont alors adressées aux organes correspondants (non représentés) de l'aéronef, de préférence à travers un calculateur de commande.

Le traitement des ordres de commande, effectué par le système 25, peut varier suivant le type d'aéronef ou les systèmes de commande mis en œuvre. A titre d'exemple, on décrit ci-après un système de couplage d'ordre se rapportant à un avion de transport de moyenne capacité.

Le couplage des ordres, ainsi que les renseignements donnés au pilote et au copilote sur les résultats de la logique du traitement des ordres, sont, dans ce cas particulier, résumés ci-après:

1. Lorsqu'un seul opérateur (pilote ou copilote) est aux commandes, ses ordres sont envoyés au calculateur de commande et une indication caractéristique apparaît sur le dispositif d'affichage 6 ou 7 de l'autre opérateur.

2. Lorsque, un opérateur étant aux commandes, l'autre opérateur déplace son manche 10 ou 11 dans le même sens que le premier ou dans le sens contraire, mais en deçà de ⅓ du débattement total dudit manche, les deux ordres sont sommés algébriquement. De plus, une indication caractéristique apparaît sur les deux dispositifs d'affichage 6 et 7.

3. Lorsque les deux opérateurs sont aux commandes, le dernier qui fait franchir à son manche 10 ou 11 le tiers du déplacement dans le sens opposé au premier prend la priorité. Cette priorité correspond à une diminution de l'autorité du pilote non prioritaire au tiers de son autorité maximale et ce pour les deux axes X-X et Y-Y. Une indication caractéristique apparaît sur le voyant 8 ou 9 de l'opérateur non prioritaire.

Le pilote non prioritaire retrouve toute son autorité sitôt que l'autre pilote ou lui-même a ramené son manche au neutre.

La procédure normale associée est que le pilote qui intervient prévienne l'autre pilote. L'action de cet autre pilote à cette annonce ou à la vue des indications affichées en 6 à 9 est de relâcher le manche.

Cette logique de couplage est le résultat d'études théoriques, d'analyses de sécurité et de longues expérimentations sur simulateurs.

Les expérimentations ont été effectuées par de nombreux pilotes d'expériences différentes. Cette logique de couplage permet d'assurer les fonctions de coordination et de sécurité que doivent remplir les commandes dans toutes les configurations de l'avion et dans toutes les phases de vol, dans tous les cas normaux ou exceptionnels de siutation de l'avion ou des pilotes. Cette logique de couplage permet aisément les reprises en main par l'un ou l'autre pilote.

Le fonctionnement, qui vient d'être décrit, du système 25 de traitement des signaux de commande est illustré ci-après en regard des figures 5a à 5f, en ce qui concerne le basculement des poignées 10 et 11 autour de l'axe Y-Y, c'est-à-dire en commande de roulis. Des figures identiques pourraient illustrer la commande en profondeur (basculement des poignées 10 et 11 autour de l'axe X-X).

Ces figures 5a à 5f illustrent un certain nombre de configurations:

a) sur la figure 5a, les deux poignées 10 et 11 sont en position neutre N. Il en résulte que les signaux VCPP et VFOP sont nuls et que le signal R à la sortie du système 25 est également nul; aucune indication n'apparaît ni sur les dispositifs d'affichage 6 et 7, ni sur les voyants 8 et 9;

b) sur la figure 5b, le pilote est aux commandes et il bascule sa poignée 10, de sortre que le capteur 17 du mécanisme 12 émet un signal de roulis VCPP. En revanche, la poignée 11 du copilote est en position neutre. Dans ce cas, le signal de roulis R délivré par le système 25 est constitué par le signal VCPP et une indication apparaît sur le dispositif d'affichage 7 associé au copilote, indiquant à celui-ci que le pilote est aux commandes;

c) sur la figure 5c, le copilote est aux commandes et sa poignée 11 est basculée, de sorte que le capteur 18 du mécanisme 13 émet un signal de roulis VFOP. En revanche la poignée 10 du pilote est en position neutre. Dans ce cas, le signal de roulis R délivré par le système 25 est constitué par le signal VFOP et une indication apparaît sur le dispositif d'affichage 6 associé au pilote, indiquant à celui-ci que le copilote est aux commandes;

d) sur la figure 5d, le pilote est aux commandes et sa poignée 10 est basculée, de sorte que le capteur 17 du mécanisme 12 émet un signal de roulis VCPP. De plus, le copilote bascule sa poignée 11, dans le même sens que celui de la poignée 10, de sorte que le capteur 18 du mécanisme 13 émet un signal de roulis VFOP de même signe que celui du signal VCPP. Dans ce cas, le signal de roulis R délivré par le système 25 est constitué par la somme des signaux VCPP + VFOP, cette somme étant toutefois limitée au signal maximal de commande en roulis, associé au débattement maximal de chacune des poignées 10 et 11; de plus, des indications apparaissent sur les deux dispositifs d'affichage 6 et 7, prévenant le pilote et le copilote de la configuration de commande simultanée;

e) bien entendu, la figure 5d illustre de même le cas où, le copilote étant aux commandes, le pilote basculerait la poignée 10 dans le même sens que celui dans lequel la poignée 11 a déjà été basculée par le copilote;

f) sur la figure 5e, le pilote est aux commandes et sa poignée 10 est basculée, de sorte que le capteur 17 du mécanisme 12 émet un signal de roulis VCPP. Le copilote bascule alors sa poignée 11, dans le sens opposé à celui de la poignée 10, mais l'amplitude du basculement de ladite poignée 11 est inférieure au tiers du débattement total possible. Le capteur 18 du mécanisme 13 émet donc un signal de roulis VFOP de signe opposé à celui du signal VCPP. Dans ce cas, le signal de roulis R délivré par le système 25 est la différence (ou somme algébrique) VCPP − VFOP et des indications apparaissent sur les deux dispositifs d'affichage 6 et 7, pour prévenir le pilote et le copilote de la situation;

g) si, le copilote étant aux commandes, le pilote basculait sa poignée 10, dans le sens opposé à celui de la poignée 11, avec un débattement inférieur au tiers du débattement total, le signal de roulis R serait égal à VFOP − VCPP. Cette situation n'est pas illustrée sur les figures, mais est symétrique de celle représentée sur la figure 5e et s'en déduit immédiatement;

h) sur la figure 5f, le pilote est aux commandes et sa poignée 10 est basculée, de sorte que le capteur 17 du mécanisme 12 émet un signal de roulis VCPP. Le copilote bascule alors sa poignée 11, dans le sens opposé à celui de la poignée 10, l'amplitude du basculement de ladite poignée 11 étant supérieure au tiers du débattement total possible. Le capteur 18 du mécanisme 13 émet donc un signal de roulis VFOP de signe opposé à celui du VCPP. Le système 25 détecte que le copilote vient de faire franchir à sa poignée 11 la position correspondant au tiers de la course et donne la priorité de commande au copilote. Pour cela, il diminue l'autorité du pilote au tiers de son autorité maximale. Le système 25 émet donc un signal R égal à la différence VFOP − $\frac{VCPP}{3}$. De plus, le voyant 8 est allumé pour prévenir le pilote de sa perte d'autorité;

i) si, le copilote étant aux commandes, le pilote basculait sa poignée 10, dans le sens opposé à celui de la poignée 11, avec un débattement supérieur au tiers du débattement total, le signal de roulis R serait égal à VCPP − $\frac{VFOP}{3}$ et le voyant 9 s'allumerait pour prévenir le copilote de la prise de priorité par le pilote. Cette situation n'est pas illustrée sur les figures, mais est symétrique de celle représentée sur la figure 5f et s'en déduit immédiatement;

j) lorsque, conformément à ce qui a été dit dans les paragraphes h) et i) ci-dessus, le pilote ou le copilote perd la priorité de commande en roulis, il la perd également automatiquement en commande de profondeur sous l'action du système 25 de sorte que le signal P est égal soit à: VFOQ − $\frac{VCPQ}{3}$, soit à VCPQ − $\frac{VFOQ}{3}$.

De même, si le pilote ou le copilote perdait la priorité de commande en profondeur, il la perdrait également en commande de roulis;

k) l'opérateur (pilote ou copilote) qui, sous l'action du système 25 et dans les conditions expliquées dans les paragraphes h), i) et j) ci-dessus, a perdu la priorité, retrouve toute son autorité sitôt que l'autre opérateur, ou lui-même, ramène sa poignée 10 ou 11 en position neutre.

**Revendications**

1. Dispositif pour la commande d'éléments d'une machine, comportant deux organes de commande du type manche (10, 11) à partir de l'un ou l'autre desquels peuvent être commandés lesdits éléments, ces organes (10, 11) étant destinés à être actionnés par des opérateurs distincts et étant chacun monté basculant autour d'au moins un axe et relié à au moins un capteur (12, 13) délivrant un signal électrique représentatif de l'amplitude de basculement du manche associé autour dudit axe de part et d'autre d'une position neutre, caractérisé en ce qu'il comporte un système (25) de traitement de signaux recevant les signaux provenant des deux capteurs et délivrant une consigne de commande (P, R) unique adressée auxdits éléments commandés de la machine.

2. Dispositif selon la revendication 1, caractérisé en ce que ladite consigne de commande unique est:
— nulle lorsque les deux manches sont en position neutre;
— égale au signal correspondant à un manche écarté de sa position neutre, lorsque l'autre manche est en position neutre;
— égale à la somme des signaux des deux capteurs lorsque les basculements des deux manches sont de même sens, cette somme étant limitée au signal maximal susceptible d'être émis par un manche;
— égale, lorsqu'un premier opérateur ayant basculé son manche dans un sens, le second opérateur bascule le sien en sens opposé, mais en deçà d'un seuil de course, à la différence entre le signal émis par le capteur associé au premier opérateur et celui émis par le capteur associé au second opérateur, et

— égale, lorsqu'un premier opérateur ayant basculé son manche dans un sens, le second opérateur bascule le sien en sens opposé, au-delà dudit seuil de course, à la différence entre le signal émis par le capteur associé au second opérateur et une fraction de celui émis par le capteur associé au premier opérateur.

3. Dispositif selon la revendication 2, caractérisé en ce que, lorsque le manche du second opérateur a été basculé en sens opposé à celui du premier au-delà dudit seuil de course, ladite consigne unique devient le signal du capteur associé audit premier opérateur, dès que le manche du second opérateur revient en position neutre ou que le manche dudit premier opérateur repasse par la position neutre.

4. Dispositif selon la revendication 2, caractérisé en ce que des dispositifs d'affichage et/ou des voyants (6 à 9) sont prévus pour indiquer à chacun des opérateurs l'origine de la consigne de commande actuelle.

5. Dispositif selon la revendication 2, caractérisé en ce que le seuil de course correspond au tiers de la course maximale.

6. Dispositif selon la revendication 2, caractérisé en ce que ladite fraction du signal du premier opérateur est égale à un tiers.

7. Dispositif selon l'une quelconque des revendications 1 à 6, dans lequel chaque manche peut basculer autour de deux axes différents et est associé à deux capteurs, délivrant respectivement des signaux représentatifs de l'amplitude de basculement dudit manche autour de ces deux axes, chacun des deux axes de basculement d'un manche étant associé à un axe de basculement de l'autre manche, caractérisé en ce que ledit système de traitement des signaux reçoit les signaux provenant des quatre capteurs et délivre deux consignes de commande, dont chacune d'elles correspond au basculement desdits manches autour d'un desdits axes.

8. Dispositif selon la revendication 7, caractérisé en ce que, si l'une des consignes de commande devient égale à la différence entre le signal émis par un capteur associé au second opérateur ayant basculé son manche et une fraction de celui émis par le capteur correspondant associé au premier opérateur, il en est de même de l'autre desdites consignes.

**Patentansprüche**

1. Vorrichtung zum Steuern von Maschinenelementen, bestehend aus zwei Steuerorganen in Form eines Knüppels (10, 11), womit erwähnte Elemente gesteuert werden können, wobei diese Organe (10, 11) von je einem Bedienungsmann betätigt werden und jedes, kippbar um mindestens eine Achse und mit wenigstens einem Fühler (12, 13) verbunden, ein elektrisches Signal erzeugt, das für die Kippamplitude des Knüppels um erwähnte Achse und beiderseits einer neutralen Stellung repräsentativ ist, dadurch gekennzeichnet, dass die Vorrichtung ein Signalverarbeitungssystem (25) enthält, das die Signale von den beiden Fühlern empfängt und an die erwähnten gesteuerten Maschinenelementen einen einmaligen Steuerbefehl (P, R) ausgibt.

2. Vorrichtung gemäss Anspruch 1, dadurch gekennzeichnet, dass der einmalige Steuerbefehl
— gleich Null ist, wenn beide Knüppel in der neutralen Stellung sich befinden,
— gleich dem Signal ist, das einem von der neutralen Stellung entfernten Knüppel entspricht, wenn der andere Knüppel sich in neutraler Stellung befindet,
— gleich der Summe der Signale der beiden Fühler ist, wenn die Kippungen beider Knüppel in gleicher Richtung verlaufen, wobei diese Summe auf das maximale Signal beschränkt ist, das von einem Knüppel ausgegeben werden kann,
— gleich ist, nachdem ein erster Bedienungsmann seinen Knüppel in eine Richtung gekippt hat, der zweite den seinen in Gegenrichtung kippt, aber diesseits einer Hubschwelle, mit der Differenz zwischen dem vom mit dem ersten Bedienungsmann verbundenen Fühler ausgegebenen Signal und dem vom mit dem zweiten Bedienungsmann verbundenen Fühler ausgegebenen Signal, und
— gleich ist, nachdem ein erster Bedienungsmann seinen Knüppel in eine Richtung gekippt hat, der zweite seinen Knüppel in Gegenrichtung kippt, über erwähnte Hubschwelle hinaus, zwar der Differenz zwischen dem vom mit dem zweiten Bedienungsmann verbundenen Fühler ausgegebenen Signal und einem Bruchteil des vom mit dem ersten Bedienungsmann verbundenen Fühler ausgegebenen Signals.

3. Vorrichtung gemäss Anspruch 2, dadurch gekennzeichnet, dass, wenn der Knüppel des zweiten Bedienungsmannes in Gegenrichtung des Knüppels des ersten Bedienungsmannes gekippt wurde, und zwar über die Hubschwelle hinaus, der einmalige Steuerbefehl das Signal des mit dem ersten Bedienungsmannes verbundenen Fühlers wird, sobald der Knüppel des zweiten Bedienungsmannes in die neutrale Stellung zurückkommt oder wenn der Knüppel des ersten Bedienungsmannes die neutrale Stellung wieder überschreitet.

4. Vorrichtung gemäss Anspruch 2, dadurch gekennzeichnet, dass Anzeigevorrichtungen und/oder Signallampen (6 bis 9) vorgesehen sind, um jedem der Bedienungsmänner die Ursache des derzeitigen Steuerbefehls anzuzeigen.

5. Vorrichtung gemäss Anspruch 2, dadurch gekennzeichnet, dass die Hubschwelle dem Drittel des Maximalhubes entspricht.

6. Vorrichtung gemäss Anspruch 2, dadurch gekennzeichnet, dass erwähnter Bruchteil des Signals des ersten Bedienungsmannes gleich einem Drittel ist.

7. Vorrichtung gemäss irgendeinem der Ansprüche 1 bis 6, in welcher jeder Knüppel um zwei verschiedene Achsen kippen kann und mit zwei Fühlern verbunden ist, die je elektrische Signale ausgeben, die für die Kippamplitude des Knüppels um diese beiden Achsen repräsentativ sind, wobei jede der beiden Kippachsen eines Knüppels mit einer Kippachse des anderen Knüppels verbunden ist, dadurch gekennzeichnet, dass das erwähnte Signalbearbeitungssystem die Signale der vier Fühler erhält und zwei Steuerbefehle ausgibt, wovon jeder dem Kippen der Knüppel um die erwähnten Achsen entspricht.

8. Vorrichtung gemäss Anspruch 7, dadurch gekennzeichnet, dass, wenn einer der Steuerbefehle gleich der Differenz zwischen dem Signal, das von einem mit dem zweiten Bedienungsmann, der seinen Knüppel gekippt hat, verbundenen Fühler ausgegeben wird, und einem Bruchteil des Signals wird, das von dem entsprechenden mit dem ersten Bedienungsmann verbundenen Fühler ausgegeben wird, desgleichen auch für den anderen Befehl gilt.

## Claims

1. Device for controlling elements of a machine, comprising two control members (10, 11) of the joy stick type, from one or other of which said elements can be controlled, these members (10, 11) being intended to be actuated by separate operators and each being mounted for tilting about at least one axis and connected to at least one sensor (12, 13) delivering an electric signal representative of the amplitude of tilting of the associated joy stick about said axis on each side of a neutral position, characterized in that it comprises a signal processing system (25), receiving the signals from the two sensors and delivering a simple control reference (P, R) addressed to said controlled elements of the machine.

2. Device according to claim 1, characterized in that said single control reference is:
— zero, when the two joy sticks are in the neutral position;
— equal to the signal corresponding to a joy stick moved away from its neutral position, when the other joy stick is in the neutral position;
— equal to the sum of the signals of the two sensors, when the tilting of the two joy sticks is in the same direction, this sum being limited to the maximum signal able to be emitted by a joy stick;
— equal, when, with a first operator having tilted his joy stick in one direction, the second operator tilts his joy stick in the opposite direction, but short of a travel threshold, to the difference between the signal emitted by the sensor associated with the first operator and that emitted by the sensor associated with the second operator; and
— equal, when, with a first operator having tilted his joy stick in one direction, the second operator tilts his joy stick in the opposite direction beyond said travel threshold, to the difference between the signal emitted by the sensor associated with the second operator and a fraction of that emitted by the sensor associated with the first operator.

3. Device according to claim 2, characterized in that when the joy stick of the second operator has been tilted in a direction opposite to that of the first beyond said travel threshold, said single reference becomes the signal of the sensor associated with said first operator, as soon as the joy stick of the second operator comes back to the neutral position or as soon as the joy stick of said first operator comes back through the neutral position.

4. Device according to claim 2, characterized in that display and/or indicator devices (6 to 9) are provided for indicating to each of the operators the origin of the existing control reference.

5. Device according to claim 2, characterized in that the travel threshold corresponds to a third of the maximum travel.

6. Device according to claim 2, characterized in that said fraction of the signal of the first operator is equal to a third.

7. Device according to any one of claims 1 to 6, in which each joy stick may tilt about two different axes and is associated with two sensors, delivering respectively electric signals representative of the amplitude of tilting of said joy stick about these two axes, each of the two tilt axes of a joy stick being associated with a tilt axis of the other joy stick, characterized in that said signal processing system receives the signals from the four sensors and delivers two control references, each of which corresponds to the tilting of said joy sticks about one of said axes.

8. Device according to claim 7, characterized in that, if one of the control references becomes equal to the difference between the signal emitted by a sensor, associated with the second operator who has tilted his joy stick, and a fraction of that emitted by the corresponding sensor, associated with the first operator, the same goes for the other of said references.

0 204 598

Fig.1

Fig.2

*Fig.3*

FD

FAV

FAR

FG

Z
N

10,11

Y

21,22

14

Z

X

12,13

24

X

23

17,18

23

15,16

19.20

*Fig.4*

10

11

12

13

25

VCPQ

VFOQ

VCPP

VFOP

P

R

11

Fig. 5a

Fig. 5d

Fig. 5b

Fig. 5e

Fig. 5c

Fig. 5f

0 204 598

13